# FASCICULE DE BREVET EUROPEEN

(11) **EP 1 013 783 B1**
(45) Date de publication et mention de la délivrance du brevet: **11.02.2004**
(21) Numéro de dépôt: 99403016.1
(22) Date de dépôt: 03.12.1999
(51) Int. Cl.: C22C 33/02, F16D 23/02

(54) **Pièce mécanique de friction et son procédé de fabrication**
Gleitteil und Verfahren zur Herstellung
Sliding part and its method of production

(30) Priorité: 09.12.1998 FR 9815529
(43) Date de publication de la demande: 28.06.2000
(73) Titulaire: Renault s.a.s., 92100 Boulogne Billancourt (FR); Federal Mogul, 38800 Le Pont de Claix (FR)
(72) Inventeur: Durand, Christophe, 38800 Le Pont de Claix (FR); Peytour-Chansac, Claude, 91190 Gif-sur-Yvette (FR); Grolleron, Christophe, 78830 Bonnelles (FR)
(74) Mandataire: Kremer, Robert A.M.

(56) Documents cités:
- EP-A- 0 443 659
- DE-A- 19 817 037
- ROSSKAMP H ET AL: "SINTERED STEELS WITH INERT HARD PHASE PRODUCED BY MECHANICAL ALLOYING IN BALL MILL" POWDER METALLURGY, vol. 39, no. 1, 1 janvier 1996 (1996-01-01), pages 37-43, XP000587287 ISSN: 0032-5899
- V M SLEPTSOV ET AL: "Some properties of titanium carbide - steel cermets with molybdenum additions" SOVIET POWDER METALLURGY AND METAL CERAMICS, vol. 13, no. 8, 1975, pages 639-642, XP002114148 New York, USA
- YAMAGUCHI K ET AL: "IMPROVEMENT OF MACHINABILITY OF SINTERED COMPOSITE-TYPE ALLOYED STEEL POWDER" TRANSACTIONS OF THE ASME- JOURNAL OF MANUFACTURING SCIENCE AND ENGINEERING, vol. 119, no. 4A, 1 novembre 1997 (1997-11-01), pages 529-536, XP000739721 ISSN: 1087-1357

## Description

La présente invention concerne une pièce mécanique de friction, obtenue par frittage, destinée à fonctionner dans un système tribologique lubrifié, un procédé de préparation d'une telle pièce ainsi que son utilisation notamment en tant qu'anneau de synchroniseur de boîte de vitesse.

Certaines pièces mécaniques telles que les anneaux de synchroniseur doivent travailler en milieu lubrifié en contact avec de l'acier de dureté élevée. La fonction de ces pièces est d'assurer un passage souple et rapide des vitesses quelles que soient les conditions de température, de pression de contact et de vitesse de frottement. Pour cela, il est nécessaire d'obtenir un coefficient de frottement relativement élevé et stable, c'est-à-dire indépendant des conditions de température, de vitesse et de pression.

Le laiton, matériau le plus couramment utilisé pour cette fonction, donne satisfaction pour la plupart des conditions de fonctionnement, sauf à basse température (passage de vitesses au démarrage) et sous des pression élevées (passage de vitesses en rétrogradation).

L'utilisation d'aciers frittés pour la fabrication d'anneaux de synchroniseur nécessite
- soit le dépôt d'un revêtement de molybdène sur la partie du pignon fou en contact avec l'anneau,
- soit la réalisation, par cofrittage, d'une couche de friction sur la surface active de l'anneau de synchronisation.

Ces méthodes sont cependant coûteuses et ne conduisent pas forcément à des performances supérieures à celles du laiton.

Une autre approche encore a consisté à réaliser des anneaux de synchroniseur frittés constitués principalement de cuivre et de particules à base de chrome (FR-A-2 698 808).

Les trois approches mentionnées, à savoir le dépôt de molybdène, le cofrittage et l'utilisation de nuances à base de bronze impliquent des coûts de fabrication élevés sans offrir une prestation améliorée du comportement en frottement pour l'application qui nous intéresse.

DE-A-19 817 037 décrit l'amélioration de la résistance à l'usure d'anneaux de synchroniseurs frittés en alliage de fer contenant Ni, Mo, Cu et à structure principalement martensitique.

La demanderesse a découvert à présent qu'il était possible d'améliorer notablement le comportement de frottement de pièces mécaniques fonctionnant en milieu lubrifié, et notamment d'obtenir des pièces ayant un coefficient de frottement relativement élevé et indépendant des conditions de fonctionnement, en utilisant pour la fabrication de telles pièces un matériau fritté constitué d'une matrice relativement tendre à base de poudres de fer et de particules d'éléments d'alliage laquelle matrice renferme en outre des particules de dureté supérieure.

La présente invention a par conséquent pour objet une pièce mécanique de friction, telle que définie dans la revendication 1 et réalisée par frittage, destinée à fonctionner en milieu lubrifié, laquelle pièce est constituée d'une matrice à base de fer et d'éléments d'alliage et de particules de renforcement de dureté élevée.

Un autre objet de l'invention est l'utilisation selon la revendication 10 de la pièce mécanique frittée définie ci-dessus notamment en tant qu'anneau de synchroniseur de boîte de vitesse.

Encore un autre objet de la présente invention est un procédé selon la revendication 11, permettant de fabriquer une pièce mécanique de friction ayant les caractéristiques décrites ci-dessus.

D'autres objets apparaîtront à la lecture de la description et des exemples qui suivront.

Le matériau servant à fabriquer les pièces de friction de la présente invention comprend d'une part une matrice formée à partir de particules à base de fer et de particules d'éléments d'alliage choisis parmi le cuivre, le nickel et le molybdène, et d'autre part des particules de renforcement.

Les poudres utilisables pour former la matrice sont des poudres à base de fer constituées de particules ayant une taille moyenne comprise entre 20 et 100 µm, de préférence entre 40 et 50 µm.

On ajoute à ces poudres à base de fer des poudres d'éléments d'alliage choisis parmi le cuivre, le nickel et le molybdène ou une combinaison de ceux-ci. Ces éléments sont ajoutés sous forme de poudre métallique.

La quantité de poudre d'éléments d'alliage est comprise entre 2 et 7 % en poids et de préférence entre 4 et 6 % en poids par rapport à la matrice totale.

Il est par ailleurs conseillé d'ajouter à ce mélange de poudres formant la matrice, une faible quantité de carbone destinée à augmenter la dureté de la matrice du produit fini. Le carbone est ajouté habituellement sous forme de graphite en des quantités ne dépassant pas 1 % en poids, et de préférence au plus égales à 0,5 % en poids rapporté à la matrice totale.

A ce mélange de poudres formant la matrice (poudre à base de fer associée à une poudre Cu, Mo et/ou Ni et éventuellement de graphite), on ajoute impérativement des particules ayant un rôle de renforcement et qui ont une dureté très supérieure à celle des particules formant la matrice. La dureté Vickers des particules de renforcement est généralement au moins égale à 2000 HV.

Ces particules de renforcement sont choisies parmi des particules de type oxyde, de type nitrure ou de type carbure. On peut indiquer à titre d'exemple de telles particules de renforcement l'alumine (Al₂O₃), le carbure de niobium (NbC) ou le nitrure de titane (TiN).

On peut également utiliser des particules composites de renforcement, à savoir des particules portant un revêtement d'une nature chimique différente de celle du noyau. Un exemple de telles particules, constituant un mode de réalisation particulier de la présente invention, sont des particules d'alumine revêtues d'un dépôt de nitrure de titane qui seront désignée par la suite Al₂O₃(TiN).

Les particules de renforcement ont une taille moyenne du même ordre de grandeur que celle des particules à base de fer formant la fraction principale de la matrice, à savoir une taille comprise entre 20 et 100 µm et de préférence entre 40 et 50 µm.

On aj oute ces particules à raison de 2 à 10 parties en volume, et de préférence à raison de 5 parties en volume, pour 100 parties en volume de particules constituant la matrice.

Le matériau formant les pièces mécaniques de la présente invention, constitué d'une matrice à base de poudre de fer, de particules d'éléments d'alliage, éventuellement de carbone, et de particules de renforcement de dureté élevée confère aux pièces un excellent comportement de friction et en particulier un coefficient de frottement relativement élevé et qui varie très peu en fonction des conditions de fonctionnement telles que la température, la pression de contact et la vitesse de frottement. Ce matériau présente donc un avantage considérable par rapport au laiton, couramment utilisé pour ces applications, et dont le coefficient de frottement diminue fortement et façon indésirable aux basses températures et pour des vitesses et pressions de frottement importantes.

Grâce à leurs propriétés mécaniques décrites ci-dessus, les pièces mécaniques conviennent particulièrement bien pour une utilisation en tant qu'anneaux de synchroniseur de boîtes de vitesses. La présente invention concerne donc également l'utilisation des pièces mécaniques de friction en tant qu'anneaux de synchroniseur dans des boîtes de vitesse de véhicules automobiles. Dans une telle utilisation en milieu lubrifié avec des conditions de fonctionnement très variables, elles se distinguent avantageusement du laiton, matériau le plus utilisé dans l'art antérieur, par un comportement de friction très fiable en particulier à basse température et à pression élevée.

Un autre avantage des pièces de friction de la présente invention réside dans le fait qu'elles peuvent être fabriquées selon un procédé classique de compactage à froid suivi d'un frittage sous atmosphère contrôlée, couramment utilisé en production en série.

La présente invention concerne donc en outre un procédé de fabrication des pièces mécaniques de friction utilisables notamment en tant qu'anneau de synchroniseur. Ce procédé consiste à mélanger à sec les différentes poudres formant la matrice et la ou les poudres de particules de renforcement, à procéder à un compactage à froid du mélange de poudres dans un moule ayant une forme appropriée, puis à fritter les pièces vertes sous une atmosphère contrôlée à une température de l'ordre de 1120 °C.

Ce procédé simple donne des pièces massives, prêtes-à-monter, ne nécessitant pas de traitement supplémentaire et qui présentent par conséquent un coût de fabrication relativement bas.

La bonne maîtrise du procédé de compactage à froid permet par ailleurs d'obtenir des produits finis aux cotes.

L'exemple suivant est destiné à illustrer l'invention sans pour autant présenter un caractère limitatif.

### Exemple

On a préparé des anneaux de synchroniseur en différents matériaux conformes à la présente invention.

Le Tableau ci-dessous présente la nature et la quantité de particules d'éléments d'alliage et de particules de renforcement ajoutées à une base de poudre de fer. Les matériaux présentés contiennent en outre 0,5 % en poids de graphite ajouté à la matrice sous forme de poudre. Les poudres ont été mélangées à sec, compactées à froid dans un moule approprié, puis frittées sous une atmosphère contrôlée à une température d'environ 1120 °C.

| matériau | particules d'éléments d'alliage ( % en poids)^{a)} | | | particules de renforcement (% en volume)^{a)} | |
|---|---|---|---|---|---|
| | Cu | Ni | Mo | Al₂O₃(TiN) | NbC |
| A | 1,5 | 4,0 | 0,5 | 5,0 | - |
| B | 1,5 | 4,0 | - | - | 5,0 |

| | | | | | |
|---|---|---|---|---|---|
| a) exprimé par rapport au poids total de la matrice (poudre de fer + éléments d'alliage + graphite) | | | | | |

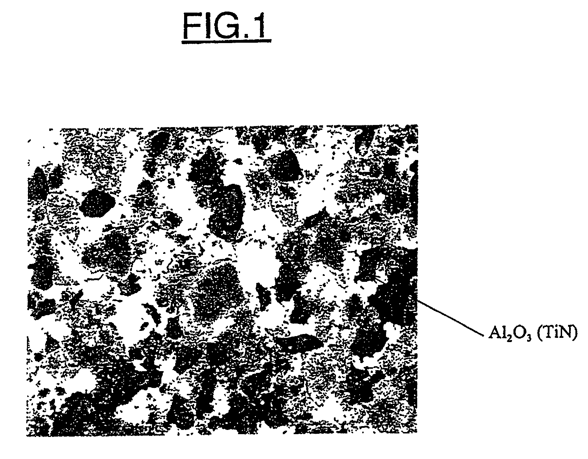

La Figure 1 présente un exemple d'une microstructure obtenue par microscopie optique. Il s'agit de la structure du matériau A constitué de poudres de fer, de carbone, de cuivre, de nickel et de molybdène. On y note principalement la présence de bainite et d'austénite non transformée.

Ces matériaux ont été utilisés pour des essais tribologiques effectués sur un tribomètre de type pion-disque. Pour différentes températures de bain d'huile et de pression de contact, on a fait varier la vitesse de frottement entre 0,1 m/seconde et 2,8 m/seconde. Les matériaux A et B présentés en tant qu'exemples dans le tableau ci-dessus ont une dureté de l'ordre de 150 - 180 HV et sont en frottement contre une pièce antagoniste en acier d'une dureté supérieure à 600 HV.

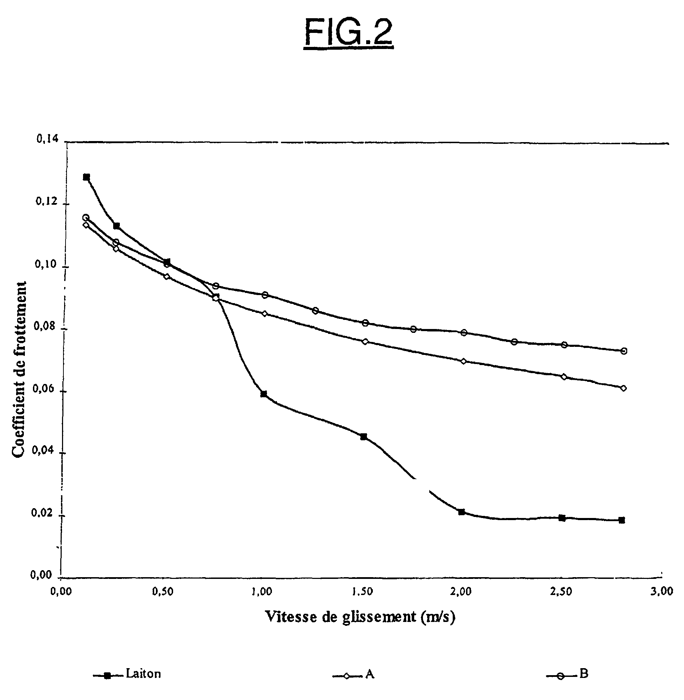

La Figure 2 montre la variation, en fonction de la vitesse de glissement, du coefficient de frottement des matériaux A et B et, à titre de comparaison, du laiton.

Ces résultats ont été obtenus dans une série d'essais à basse température (20 °C) et à une pression de contact élevée (56 MPa), conditions dans lesquelles les performances du laiton sont particulièrement insatisfaisantes.

On peut constater qu'à cette température et à cette pression le coefficient des matériaux indiqués à titre d'exemples de la présente invention reste essentiellement stable lorsque la vitesse de frottement augmente alors que, dans les mêmes conditions, celui du laiton diminue de manière spectaculaire.

## Revendications

1. Pièce mécanique de friction, réalisée par frittage, destinée à fonctionner en milieu lubrifié, faite en un matériau constitué
(A) d'une matrice formée à partir
(i) de particules à base de fer et
(ii) de 2 à 7 % en poids, rapporté à la matrice totale, de particules d'éléments d'alliage choisis parmi le cuivre, le nickel et le molybdène, et
(iii) éventuellement du carbone
(B) de 2 à 10 parties en volume, pour 100 parties en volume de particules constituant la matrice (A), de particules de renforcement ayant une taille moyenne comprise entre 20 et 100 µm et une dureté supérieure à celle des particules de la matrice.

2. Pièce mécanique selon la revendication 1, **caractérisée en ce que** les particules de renforcement ont une dureté Vickers au moins égale à 2000 HV.

3. Pièce mécanique selon l'une des revendications 1 et 2, **caractérisée en ce que** les particules de renforcement (B) sont choisies parmi les particules de type oxyde, nitrure ou carbure ou une combinaison de ceux-ci.

4. Pièce mécanique selon la revendication 3, **caractérisée en ce que** les particules de renforcement sont choisies parmi l'oxyde d'aluminium, le carbure de niobium et le nitrure de titane ou une combinaison de ceux-ci.

5. Pièce mécanique selon l'une quelconque des revendications 1 à 4, **caractérisée en ce que** les particules de renforcement sont des particules portant un revêtement d'une nature chimique différente telles que des particules d'alumine (Al₂O₃) portant un revêtement de nitrure de titane (TiN).

6. Pièce mécanique selon l'une quelconque des revendications précédentes, **caractérisée en ce que** la matrice (A) contient de 4 à 6 % en poids de particules d'éléments d'alliage (ii).

7. Pièce mécanique selon l'une quelconque des revendications précédentes, **caractérisée en ce que** la proportion de particules de renforcement (B) est égale à 5 parties en volume, pour 100 parties en volume de particules constituant la matrice (A).

8. Pièce mécanique selon l'une quelconque des revendications précédentes, **caractérisée en ce que** la matrice contient en outre jusqu'à 1 % en poids, de préférence jusqu'à 0,5 % en poids de carbone ajouté sous forme de graphite.

9. Pièce mécanique selon l'une quelconque des revendications précédentes, **caractérisée en ce que** les particules de fer constituant la matrice (A) et les particules de renforcement (B) ont une taille moyenne comprise dans l'intervalle allant de 20 à 100 µm, de préférence de 40 à 50 µm.

10. Utilisation d'une pièce mécanique selon l'une quelconque des revendications précédentes en tant qu'anneau de synchronisation pour boîtes de vitesses de véhicules automobiles.

11. Procédé de fabrication de pièces mécaniques de friction selon l'une quelconque des revendications 1 à 9, **caractérisé en ce que** l'on mélange à sec
- une poudre de particules à base de fer,
- une poudre de particules d'éléments d'alliage choisis parmi Cu, Ni et Mo,
- une poudre de particules de renforcement ayant une taille moyenne comprise entre 20 et 100 µm, et
- éventuellement, une poudre de graphite,
en les proportions appropriées, jusqu'à obtention d'un mélange homogène, **en ce que** l'on soumet ce mélange de poudres à un compactage à froid dans un moule approprié, et **en ce que** l'on densifie la pièce ainsi obtenue par frittage dans une atmosphère contrôlée à une température de l'ordre de 1120 °C.

## Patentansprüche

1. Mechanisches Reibungsteil, welches durch Sintern realisiert ist, welches dafür bestimmt ist, in einer geschmierten Umgebung zu funktionieren, hergestellt aus einem Material, welches gebildet wird aus
(A) einer Matrize, die gebildet ist ausgehend von
(i) Teilchen auf Basis von Eisen und
(ii) 2 bis 7 Gew.-%, bezogen auf die gesamte Matrize von Teilchen von Legierungselementen, ausgewählt aus Kupfer, Nickel und Molybdän, und
(iii) gegebenenfalls Karbon
(B) 2 bis 10 Volumenteile für 100 Volumenteile von Teilchen, welche die Matrize (A) bilden von Verstärkungsteilchen, welche eine mittlere Größe, enthalten zwischen 20 und 100 µm, aufweisen und eine größere Härte als diejenige der Teilchen der Matrize.

2. Mechanisches Teil gemäß Anspruch 1, **dadurch gekennzeichnet, dass** die Verstärkungsteilchen eine Vickers-Härte von mindestens 2000 HV aufweisen.

3. Mechanisches Teil gemäß einem der Ansprüche 1 und 2, **dadurch gekennzeichnet, dass** die Verstärkungsteilchen (B) ausgewählt sind unter den Teilchen vom Typ Oxid, Nitrid oder Karbid oder einer Kombination von diesen.

4. Mechanisches Teil gemäß Anspruch 3, **dadurch gekennzeichnet, dass** die Verstärkungsteilchen ausgewählt sind aus Aluminiumoxid, Niobiumkarbid und Titannitrid oder einer Kombination von diesen.

5. Mechanisches Teil gemäß irgendeinem der Ansprüche 1 bis 4, **dadurch gekennzeichnet, dass** die Verstärkungsteilchen Teilchen sind, welche einen Überzug einer chemisch unterschiedlichen Art aufweisen, wie z.B. Aluminiumteilchen (Al₂O₃), welche einen Überzug von Titannitrid (TiN) tragen.

6. Mechanisches Teil gemäß irgendeinem der vorherigen Ansprüche, **dadurch gekennzeichnet, dass** die Matrize (A) 4 bis 6 Gew.-% von Legierungselementteilchen (ii) enthält.

7. Mechanisches Teil gemäß irgendeinem der vorherigen Ansprüche, **dadurch gekennzeichnet, dass** das Verhältnis von Verstärkungsteilen (B) gleich zu 5 Volumenteilen für 100 Volumenteile von Teilchen, welche die Matrize (A) bilden, ist.

8. Mechanisches Teil gemäß irgendeinem der vorherigen Ansprüche, **dadurch gekennzeichnet, dass** die Matrize des Weiteren bis zu 1 Gew.-%, vorzugsweise bis zu 0,5 Gew.-% Karbon enthält, das in Form von Graphit hinzugefügt ist.

9. Mechanisches Teil gemäß irgendeinem der vorherigen Ansprüche, **dadurch gekennzeichnet, dass** die Eisenteilchen, welche die Matrize (A) bilden, und die Verstärkungsteilchen (B) eine mittlere Größe aufweisen, enthalten in dem Bereich, der von 20 bis 100 µm, vorzugsweise von 40 bis 50 µm, geht.

10. Verwendung eines mechanischen Teils gemäß irgendeinem der vorherigen Ansprüche als Synchronisierring für Getriebe von Kraftfahrzeugen.

11. Herstellungsverfahren von mechanischen Reibungsteilen gemäß irgendeinem der Ansprüche 1 bis 9, **dadurch gekennzeichnet, dass** man trocken mischt
- ein Pulver von Teilchen auf Basis von Eisen,
- ein Pulver von Teilchen von Legierungselementen, ausgewählt unter Cu, Ni und Mo,
- ein Pulver von Verstärkungsteilchen, welche eine mittlere Größe enthalten zwischen 20 und 100 µm, aufweisen, und
- gegebenenfalls ein Graphitpulver,
in passenden Verhältnissen, bis zum Erhalt einer homogenen Mischung, dadurch, dass man diese Mischung von Pulvern einer Kaltverdichtung in einer passenden Form unterzieht, und dass man das so erhaltene Teil durch Sintern verdichtet in einer Atmosphäre, die auf eine Temperatur in der Größenordnung von 1120°C gesteuert ist.

## Claims

1. A mechanical friction component, produced by sintering, adapted to operate in a lubricated environment, made from a material formed from:
a) a matrix formed from
i) iron-based particles and
ii) from 2 to 7% by weight, in relation to the total matrix, of particles of alloying elements selected from copper, nickel and molybdenum, and
iii) possibly carbon,
b) from 2 to 10 parts by volume, for 100 parts by volume of particles forming the matrix a), of reinforcing particles having an average size of between 20 and 100 ì m and a hardness greater than that of the particles of the matrix.

2. A mechanical component as claimed in claim 1, **characterised in that** the reinforcing particles have a Vickers hardness at least equal to 2000 HV.

3. A mechanical component as claimed in claims 1 and 2, **characterised in that** the reinforcing particles (b) are selected from particles of the oxide, nitride or carbide type or a combination thereof.

4. A mechanical component as claimed in claim 3, **characterised in that** the reinforcing particles are selected from aluminium oxide, niobium carbide and titanium nitride or a combination thereof.

5. A mechanical component as claimed in any one of claims 1 to 4, **characterised in that** the reinforcing particles are particles bearing a coating of a different chemical nature such as particles of alumina (Al₂O₃) bearing a coating of titanium nitride (TiN).

6. A mechanical component as claimed in any one of the preceding claims, **characterised in that** the matrix (a) contains 4 to 6% by weight of particles of alloying elements (ii).

7. A mechanical component as claimed in any one of the preceding claims, **characterised in that** the proportion of reinforcing particles (b) is equal to 5 parts by volume, for 100 parts by volume of particles forming the matrix (a).

8. A mechanical component as claimed in any one of the preceding claims, **characterised in that** the matrix also contains up to 1% by weight, preferably up to 0.5% by weight, of carbon added in the form of graphite.

9. A mechanical component as claimed in any one of the preceding claims, **characterised in that** the iron particles forming the matrix (a) and the reinforcing particles (b) have an average size in the range of 20 to 100 ì m, preferably 40 to 50 ìm.

10. Use of a mechanical component as claimed in any one of the preceding claims as a synchroniser ring for gear boxes of automobile vehicles.

11. A method of manufacture of mechanical friction components as claimed in any one of claims 1 to 9, **characterised in that**
- a powder of iron-based particles;
- a powder of particles of alloying elements selected from Cu, Ni and Mo;
- a powder of reinforcing particles having an average size of between 20 and 100 ìm, and
- possibly, a graphite powder;
are dry mixed, in the appropriate proportions, until a homogeneous mixture is obtained, **in that** this powder mixture is subjected to cold compacting in an appropriate mould, and **in that** the component obtained in this way is densified by sintering in a controlled atmosphere at a temperature of the order of 1120°C.
